(19) Europäisches Patentamt / European Patent Office / Office européen des brevets

(11) **EP 4 477 676 A1**

(12) **EUROPEAN PATENT APPLICATION**

(43) Date of publication:
**18.12.2024 Bulletin 2024/51**

(21) Application number: **23179356.3**

(22) Date of filing: **14.06.2023**

(51) International Patent Classification (IPC):
***C08F 6/28*** *(2006.01)*   ***C08J 11/00*** *(2006.01)*
***C08L 23/10*** *(2006.01)*

(52) Cooperative Patent Classification (CPC):
(C-Sets available)
**C08F 6/28**                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Basell Poliolefine Italia S.r.l.
20121 Milano (IT)**

(72) Inventors:
• **Cavalieri, Claudio
44122 Ferrara (IT)**
• **Destro, Mara
44122 Ferrara (IT)**
• **Consalvi, Marco
44122 Ferrara (IT)**
• **Tisi, Francesca
44122 Ferrara (IT)**

(74) Representative: **LyondellBasell
c/o Basell Poliolefine Italia
Intellectual Property
P.le Donegani 12
44122 Ferrara (IT)**

(54) **PROCESS FOR REMOVING ODOR IN RECYCLED POLYOLEFIN COMPOSITION**

(57)    A process for removing odor from a recycled polyolefin composition comprising the step of:
a) providing a recycled polyolefin composition;
b) mixing the recycled polyolefin composition with at least one odor removal component and
c) extruding the mixture;
wherein the amount of odor removal component ranges from 0.1 wt% to 10 wt% with respect to the total composition.

EP 4 477 676 A1

(52) Cooperative Patent Classification (CPC): (Cont.)

C-Sets
**C08F 6/28, C08L 23/10**

**Description**

FIELD OF THE INVENTION

The present disclosure relates to a process for removing odor in a recycled polypropylene composition by adding odor removal components

BACKGROUND OF THE INVENTION

It is known that the demand for plastic packaging is increasing and with it the volume of plastic in landfills. While plastic waste from industries can be treated by mechanical recycling obtaining a reusable high-quality material as polymeric raw material, domestic plastic waste has a high content of food waste and cleaning products that are absorbed into the polymeric matrix, becoming pollutants and cause of bad odor. These odoriferous substances are volatile organic compounds that currently cannot be removed by conventional washing, which limits their reuse as raw material for products for outdoor use.

Currently, conventional mechanical recycling consists of a selective classification of plastic waste based on the nature of the polymer, washing with water, which can be add reagents such as soda, surfactants and oxidants, and finally it goes through a mechanical drying stage prior to the extrusion stage where the recycled pellets are obtained.

WO0110721 refers to a method of reducing odors by ionizing rays in an atmosphere that is not necessarily inert.

As previously stated, due to the continuous increase in the use of plastic products, the generation of this waste has become a global problem in today's society, so its recycling and its subsequent use as raw material is a necessity, if you want to reduce plastic in landfills. At the same time, using plastic as a raw material allows a reduction in production costs in the industries of the sector, in addition to increasing the added value of the product, since awareness about the care of the environment and with it the demand is increasing. of recycled products in the market.

SUMMARY OF THE INVENTION

Thus an object of the present disclosure is a process for removing odor from a recycled polyolefin composition comprising the step of:

 a) providing a recycled polyolefin composition;
 b) mixing the recycled polyolefin composition with at least one odor removal component and
 c) extruding the mixture;

wherein the amount of odor removal component ranges from 0.1 wt% to 10 wt% with respect to the total composition.

DETAILED DESCRIPTION OF THE IN VENTION

Thus an object of the present disclosure is a process for removing odor from a recycled polyolefin composition comprising the step of:

 a) providing a recycled polyolefin composition;
 b) mixing the recycled polyolefin composition with at least one odor removal component and
 c) extruding the mixture;

wherein the amount of odor removal component ranges from 0.1 wt% to 10.0 wt% preferably from 0.3 wt% to 8.0 wt%; more preferably from 0.5 wt% to 6.0 wt%; even more preferably from 0.5 wt% to 3.5 wt% with respect to the total composition.

The recycled polyolefin composition preferably origins from of a waste material containing not less than 80% by weight, typically not less than 90% by weight, in particular from 80% or 90% up to 99% by weight, with respect to the total weight of the component, of polyethylene or polypropylene or their mixtures. The term "waste" is used to designate polymer materials deriving from at least one cycle of processing into manufactured articles, as opposed to virgin polymers. comprises a mixture of recycled polypropylene and polyethylene blend as main components.

The recycled polyolefin composition is preferably a polyethylene recycled composition or a polypropylene recycled composition or a mixture thereof.

The recycled polyethylene composition can comprise one or more materials selected from high density polyethylene (HDPE), low density polyethylene (LDPE), linear low density polyethylene (LLDPE).

More preferably the recycled polyolefin composition is a recycled polypropylene composition.

The recycled polypropylene composition contains preferably at least 50 wt%; more preferably at least 60 wt% ;

even more preferably at least 70 wt% of derived units of propylene. The remaining comonomers can be ethylene; 1-butene; 1-hexene or 1-octene derived units; ethylene being preferred.

Preferably the Melt Flow Rate of the recycled polypropylene composition, determined according to the method ISO 1133 (230° C, 2.16 kg), ranges from 10 g/10 min to 150 g/10 min; preferably from 20 g/10 min to 100 g/10 min, more preferably from 25 g/10 min to 80 g/10 min.

The recycled polypropylene composition can be Post-Industrial Resin (PIR) or Post-Consumer Resin (PCR) or mixtures thereof.

Post-Industrial Resin (PIR) is the waste generated from the manufacturing process that is reclaimed or used again in the same material.

Post-Consumer Resin (PCR) defined as a resin used by the consumer for its intended purpose, that has reached its end of use, and then tossed into a recycling bin is excluded.

The process of the present invention give rises to a deodorized polypropylene composition.

The limonene content of the extruded polymers from the process of the present disclosure is lower than 4.5 ppm; preferably 4.3 ppm, more preferably lower than 4.0 ppm; even more preferably lower than 3.5 ppm, the higher value being 0.5 ppm. he limonene content can be measured according to methods know in the art such as the method described in WO2023062058.

The SHS (120°C) measured according to VDA277 content of the extruded polymers from the process of the present disclosure is lower than $35\mu gC/g$; preferably lower than $33\mu gC/g$; more preferably lower than $32\mu gC/g$; even more preferably lower than $20\mu gC/g$.

A further object of the present invention is a polymer composition comprising:

A) from 99.9 wt% to 90.0 wt% of a recycled polyolefin composition composition;
B) from 0.1 wt% to 10.0 wt% of a at least one odor removal component.

the sum of the amounts of A) and B) being 100 wt%.

The recycled polyolefin composition component A) is preferably a polyethylene recycled composition or a polypropylene recycled composition or a mixture thereof as above described.

The odor removal component can be selected from stripping agents; masking or neutralizing agents; adsorbing agents; molecular sieves; reactive agents; or combination thereof.

Example of stripping agents is BYK P4200. Example of stripping agents/molecular sieves are Zeoflair 100 and Calcium Oxide. Example of reactive agents is TEGO Sorb PY88TQ. Examples of masking or neutralizing agent are Struktol RP53 or Struktol RP59.

Preferred odor removal component are stripping agents. More preferably the stripping agent is BYK P4200.

The following examples are given to illustrate the present invention without limiting purpose.

EXAMPLE

**Characterization methods**

**Melting temperature and crystallization temperature:** Determined by differential scanning calorimetry (DSC)

. weighting 6 ±1 mg, is heated to 220 ±1° C at a rate of 20 °C/min and kept at 220 ±1° C for 2 minutes in nitrogen stream and it is thereafter cooled at a rate of 20° C/min to 40 ±2° C, thereby kept at this temperature for 2 min to crystallize the sample. Then, the sample is again fused at a temperature rise rate of 20° C/min up to 220° C ±1. The melting scan is recorded, a thermogram is obtained, and, from this, melting temperatures and crystallization temperatures are read.

**Melt Flow Rate:** Determined according to the method ISO 1133 (230° C, 2.16 kg).

**Xylene-soluble fraction (XS) at 25°C**

Xylene Solubles at 25°C have been determined according to ISO 16152: 2005; with solution volume of 250 ml, precipitation at 25°C for 20 minutes, 10 of which with the solution in agitation (magnetic stirrer), and drying at 70°C.

**Intrinsic Viscosity (I.V.)**

The sample is dissolved by tetrahydronaphthalene at 135 °C and then it is poured into the capillary viscometer.

The viscometer tube (Ubbelohde type) is surrounded by a cylindrical glass jacket; this setup allows temperature control with a circulating thermostated liquid.

The downward passage of the meniscus is timed by a photoelectric device. The passage of the meniscus in front of the upper lamp starts the counter which has a quartz crystal oscillator. The meniscus stops the counter as it passes the lower lamp and the efflux time is registered: this is converted into a value of intrinsic viscosity through

**Haze (on 1 mm plaque)**

According to the method used, 5×5 cm specimens are cut molded plaques of 1 mm thick and the haze value is measured using a Gardner photometric unit connected to a Hazemeter type UX-10 or an equivalent instrument having G.E. 1209 light source with filter "C". Reference samples of known haze are used for calibrating the instrument. The plaques to be tested are produced according to the following method.

75×75×1 mm plaques are molded with a GBF Plastiniector G235190 Injection Molding Machine, 90 tons under the following processing conditions:

> Screw rotation speed: 120 rpm
> Back pressure: 10 bar
> Melt temperature: 260°C
> Injection time: 5 sec
> Switch to hold pressure: 50 bar
> First stage hold pressure: 30 bar
> Second stage pressure: 20 bar
> Hold pressure profile: First stage 5 sec
> Second stage 10 sec
> Cooling time: 20 sec
> Mold water temperature: 40°C

**Ethylene content in the copolymers**

13C NMR spectra were acquired on a Bruker AV-600 spectrometer equipped with cryoprobe, operating at 160.91 MHz in the Fourier transform mode at 120 °C.

The peak of the $S\beta\beta$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane-d2 at 120 °C with a 8 % wt/v concentration. Each spectrum was acquired with a 90° pulse, and 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride- diethyl-aluminum chloride" M. Kakugo, Y. Naito, K. Mizunuma and T. Miyatake, Macromolecules, 1982, 15, 1150) using the following equations:

$$PPP = 100 \ T\beta\beta/S \qquad PPE = 100 \ T\beta\delta/S \qquad EPE = 100 \ T\delta\delta/S$$

$$PEP = 100 \ S\beta\beta/S \qquad PEE = 100 \ S\beta\delta/S \qquad EEE = 100 \ (0.25 \ S\gamma\delta + 0.5 \ S\delta\delta)/S$$

$$S = T\beta\beta + T\beta\delta + T\delta\delta + S\beta\beta + S\beta\delta + 0.25 \ S\gamma\delta + 0.5 \ S\delta\delta$$

The molar percentage of ethylene content was evaluated using the following equation:

E% mol = 100 * [PEP+PEE+EEE]The weight percentage of ethylene content was evaluated using the following equation:

$$E\% \ wt. = \frac{100 * E\% \ mol * MWE}{E\% \ mol * MWE + \ P\% \ mol * MWP}$$

where P% mol is the molar percentage of propylene content, while MWE and MWP are the molecular weights of ethylene and propylene, respectively.

The product of reactivity ratio r1r2 was calculated according to Carman (C.J. Carman, R.A. Harrington and C.E. Wilkes, Macromolecules, 1977; 10, 536) as:

$$r_1 r_2 = 1 + \left( \frac{EEE + PEE}{PEP} + 1 \right) - \left( \frac{P}{E} + 1 \right) \left( \frac{EEE + PEE}{PEP} + 1 \right)^{0,5}$$

The tacticity of Propylene sequences was calculated as mm content from the ratio of the PPP mmTββ (28.90-29.65 ppm) and the whole Tββ (29.80-28.37 ppm).

Impact test: ISO 180
**Preparation of injection molded specimens:** test specimens 80 × 10 × 4 mm were obtained according to the method ISO 1873-2:2007.
**Preparation of injection molded specimens:** test specimens 80 × 10 × 4 mm were obtained according to the method ISO 1873-2:2007.
**Charpy Impact test at 23°C:** measured according to ISO 179-1:2010 on injection molded specimens.

the recycled polypropylene used in the examples is sold by QCP with the tradename QCP300P. It contains residue-drained, rigid, system-compatible items made of polypropylene, volume ≤ 5 litres, e.g. bottles, bottles, cups and trays, incl. secondary components such as lids, labels etc.
Purity is at least 94 wt%, metallic and mineral impurities with a unit weight of > 100 g and cartridges for sealants are not permitted!

Impurities

| Other metal items | < 0.5 % by mass |
|---|---|
| Rigid PE items | < 1 % by mass |
| Expanded plastics incl. EPS items | < 0.5 % by mass |
| Plastic films | < 2 % by mass |
| Other residues | < 3 % by mass |

Examples of other residues are:

- Glass
- Paper, Board, Cardboard
- Composite paper/cardboard materials (e.g. liquid packaging boards)
- Aluminized plastics
- Other materials (e.g. rubber, stones, wood, textiles, nappies)
- Compostable waste (e.g. food, garden waste)

The Melt flow rate (230 °C/ 2.16 kg) of T1 is 16 g/10 min and the melting point is 150°C
The odor removal component have been mixed with samples of QCP300P and the resulting composition has been extruded in a twin screw extruder ZSK 26 with the following process parameters: T = 220-200°C / 600 rpm / Output 20 kg/h / Vacuum system.
The resulting pellets have been packed to aluminum bags to prevent moisture pick-up and odor venting during transport. Various odor removal has been used. The resulting compositions are reported in table 1.

**Table 1**

| reference | | | wt% |
|---|---|---|---|
| QCP300P | ------- | | |
| 1 | Zeoflair 100 | Adsorbing agents/ Molecular sieves | 3 |

(continued)

| reference | | | wt% |
|---|---|---|---|
| 2 | Zeoflair 100 | Adsorbing agents/ Molecular sieves | 0,6 |
| 3 | Add-Vance OR917 | Combined action | 1 |
| 4 | Add-Vance OR917 | Combined action | 2 |
| 5 | BYK P4200 | Stripping Agents | 2 |
| 6 | BYK P4200 | Stripping Agents | 5 |
| 7 | TEGO Sorb PY88TQ | Reactive Agents | 1 |
| 8 | TEGO Sorb PY88TQ | Reactive Agents | 2 |
| 9 | Struktol RP53 | Masking/Neutralizing Agents | 1,5 |
| 10 | Calcium Oxide | Adsorbing agents/ Molecular sieves | 3 |
| 11 | TEGO Sorb PY88 TQ+ CaO | Combined Action | 0.5 + 1 |

Odor of the resulting compositions have been analyzed, SHS (120°C) according to VDA277 and limonene content has been measured, The results are reported in table 2.

**Table 2**

| composition | limonene level ppm | SHS (120°C)-VDA277 $\mu$gC/g |
|---|---|---|
| QCP300P | 2.9 | 39.9 |
| 1 | 1.7 | 19.5 |
| 2 | 1.9 | 22.7 |
| 3 | 2.8 | 25.1 |
| 4 | 2.7 | 26.6 |
| 5 | 2.6 | 17.7 |
| 6 | 2.5 | 16.8 |
| 7 | not measured | 27.8 |
| 8 | not measured | 30.2 |
| 9 | not measured | 27.4 |
| 10 | not measured | 23.8 |
| 11 | not measured | 24.7 |

From table 2 clearly results that after the treatment the odor has been removed.

**Claims**

1.  A process for removing odor from a recycled polyolefin composition comprising the step of:

    a) providing a recycled polyolefin composition;
    b) mixing the recycled polyolefin composition with at least one odor removal component and
    c) extruding the mixture;

    wherein the amount of odor removal component ranges from 0.1 wt% to 10 wt% with respect to the total composition.

2.  The process according to claim 1 wherein the recycled polyolefin composition is a polyethylene recycled composition or a polypropylene recycled composition or a mixture thereof

3. The process according to any of claims 1-2 wherein the recycled polyolefin composition is a polypropylene recycled composition

4. The process according to any of claims 1-3 wherein the amount of odor removal component ranges preferably from 0.3 wt% to 8.0 wt%.

5. The process according to any of claims 1-4 wherein the amount of odor removal component ranges preferably from 0.5 wt% to 6.0 wt%.

6. The process according to any of claims 1-5 wherein the limonene content of the extruded polymers from step c) is lower than 4.5 ppm.

7. The process according to any of claims 1-6 wherein the odor removal component is selected from stripping agent.

8. The process according to any of claims 1-7 wherein the recycled polypropylene composition contains at least 50 wt%; of derived units of propylene.

9. The process according to any of claims 1-8 wherein the recycled polypropylene composition contains at least 60 wt%; of derived units of propylene.

10. The process according to any of claims 1-9 wherein the recycled polypropylene composition contains one or more comonomers selected from the group consisting of ethylene; 1-butene; 1-hexene and 1-octene derived units other than derived units of propylene.

11. The process according to any of claims 1-10 wherein the SHS (120°C) measured according to VDA277 content of the extruded polymers from the process of the present disclosure is lower than 35μgC/g.

12. The process according to any of claims 1-11 wherein the SHS (120°C) measured according to VDA277 content of the extruded polymers from the process of the present disclosure is lower than 33μgC/g.

13. The process according to any of claims 1-12 wherein the amount of odor removal component ranges preferably from 0.5 wt% to 3.5 wt%.

14. A polymer composition comprising:

A) from 99.9 wt% to 90.0 wt% of a recycled polyolefin composition;
B) from 0.1 wt% to 10.0 wt% of a at least one odor removal component.

the sum of the amounts of A) and B) being 100 wt%.

15. The polymer composition according to claim 14 wherein the odor removal component can be selected from stripping agents; masking or neutralizing agents; adsorbing agents; molecular sieves; reactive agents; or combination thereof.

## EUROPEAN SEARCH REPORT

| | | Application Number |
| | | EP 23 17 9356 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/260998 A1 (DOW GLOBAL TECHNOLOGIES LLC [US]; HAUSMANN KARLHEINZ [CH]) 15 December 2022 (2022-12-15) | 1-15 | INV. C08F6/28 C08J11/00 |
| Y | * claims 1-17; examples 1,2 * | 1-15 | |
| X | WO 2022/260994 A1 (DOW GLOBAL TECHNOLOGIES LLC [US]) 15 December 2022 (2022-12-15) | 1-15 | ADD. C08L23/10 |
| Y | * paragraph [0016] – paragraph [0022]; claims 1-18; examples 1,2 * | 1-15 | |
| X | CN 108 148 281 A (HEFEI GENIUS NEW MAT CO LTD) 12 June 2018 (2018-06-12) | 1-5, 13-15 | |
| Y | * claims 1-11; examples 1-7 * | 6-12 | |
| X | CN 115 403 858 A (SHANGHAI RUIJU ENVIRONMENTAL PROTECTION TECH CO LTD) 29 November 2022 (2022-11-29) | 1-5, 13-15 | |
| Y | * claims 1-10; examples 1-4 * | 6-12 | |
| X | EP 3 964 542 A1 (BOREALIS AG [AT]) 9 March 2022 (2022-03-09) | 1-5 | |
| Y | * claims 1-15; examples 1-5 * | 6-15 | |

| | |
|---|---|
| | TECHNICAL FIELDS SEARCHED (IPC) |
| | C08J C08F |

The present search report has been drawn up for all claims

| Place of search | Date of completion of the search | Examiner |
|---|---|---|
| Munich | 5 December 2023 | Gold, Josef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 9356

This annex lists the patent family members relating to the patent documents cited in  the above-mentioned European search report.
The members are as contained in the European Patent Office EDP file on
The European Patent Office is in no way liable for these particulars which are merely given for the purpose of information.

05-12-2023

| Patent document cited in search report | | Publication date | Patent family member(s) | | Publication date |
|---|---|---|---|---|---|
| WO 2022260998 | A1 | 15-12-2022 | CA | 3219859 A1 | 15-12-2022 |
| | | | WO | 2022260998 A1 | 15-12-2022 |
| WO 2022260994 | A1 | 15-12-2022 | CA | 3219895 A1 | 15-12-2022 |
| | | | WO | 2022260994 A1 | 15-12-2022 |
| CN 108148281 | A | 12-06-2018 | NONE | | |
| CN 115403858 | A | 29-11-2022 | NONE | | |
| EP 3964542 | A1 | 09-03-2022 | BR | 112023002861 A2 | 14-03-2023 |
| | | | CN | 115916849 A | 04-04-2023 |
| | | | EP | 3964542 A1 | 09-03-2022 |
| | | | ES | 2934969 T3 | 28-02-2023 |
| | | | FI | 3964542 T3 | 22-02-2023 |
| | | | JP | 2023538559 A | 08-09-2023 |
| | | | KR | 20230052945 A | 20-04-2023 |
| | | | TW | 202210529 A | 16-03-2022 |
| | | | US | 2023323069 A1 | 12-10-2023 |
| | | | WO | 2022049068 A1 | 10-03-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0110721 A

- WO 2023062058 A

**Non-patent literature cited in the description**

- **C. J. CARMAN** ; **R. A. HARRINGTON** ; **C. E. WILKES**. Monomer Sequence Distribution in Ethylene-Propylene Rubber Measured by 13C NMR. 3. Use of Reaction Probability Mode. *Macromolecules*, 1977, vol. 10, 536

- **M. KAKUGO** ; **Y. NAITO** ; **K. MIZUNUMA** ; **T. MIYATAKE**. Carbon-13 NMR determination of monomer sequence distribution in ethylene-propylene copolymers prepared with $\delta$-titanium trichloride-diethyl-aluminum chloride. *Macromolecules*, 1982, vol. 15, 1150

- **C.J. CARMAN** ; **R.A. HARRINGTON** ; **C.E. WILKES**. *Macromolecules*, 1977, vol. 10, 536